# EUROPEAN PATENT APPLICATION

(11) **EP 4 513 628 A1**
(43) Date of publication of application: **26.02.2025**
(21) Application number: 23193376.3
(22) Date of filing: 25.08.2023
(51) Int. Cl.: H01M 10/63, H01M 10/6556, H01M 10/6566, H01M 10/6568, H01M 10/613, H01M 10/615

(54) **BATTERY SYSTEM**

(71) Applicant: Rimac Technology LLC, 10431 Sveta Nedelja (HR)
(72) Inventor: Miller, Jack William, Witney, Oxfordshire, OX28 3FP (GB); Bradac, Frantisek, 69002 Breclav (CZ)
(74) Representative: Hoffmann Eitle

(57) **Abstract**

A battery system comprising: a battery comprising a plurality of battery modules, each battery module comprising at least one battery cell, a first channel for distributing a fluid for the plurality of battery modules, a restriction means for reducing the amount of the fluid to be distributed for a subset of battery modules from the plurality of battery modules, and a control means for controlling said restriction means to reduce the amount of said fluid to be distributed for the subset of battery modules.

## Description

### Technical field

The present invention relates to the technical field of battery systems. More particularly, the present invention relates to the technical field of thermal management in battery systems.

### Background

Batteries are playing an increasing role in energy storage for both mobility and grid storage applications. The transition towards using renewable fuel types is driving demand for cheaper, longer lasting and more efficient types of batteries and power conversion methods.

A battery normally comprises one or more battery modules, and each battery module normally comprises one or more battery cells packed within the available space in the battery module.

Thermal management of the battery is a crucial aspect in ensuring safe operation and an extended life cycle of the battery. The thermal management includes temperature control of the battery via both heating and cooling.

Battery cells tend to have reduced performance, reduced round trip efficiency, and a higher propensity to non-reversible aging at low temperatures.

Heating of the battery may be required in situations in which the temperature of the battery, influenced for example by the temperature of the surrounding environment of the battery, is disadvantageous for operation of the battery. In such situations it may be required that the battery is heated at least to the predetermined temperature above which safe operation of the battery can be guaranteed before the battery is operated. However, heating of the battery can be energetically inefficient, which in turn reduces the overall energetic efficiency of the system in which the battery is used.

Batteries may also require cooling in order to stay within the operational temperature range during operation. The heat generated by the plurality of battery cells needs to be properly rejected from the corresponding battery module and accordingly the battery, in order that a safe operation of the battery is ensured. However, cooling of the battery also increases the energy consumption in the system leading again to a reduced overall energetic efficiency of the system.

An adequate thermal management of the battery can increase the overall energetic efficiency of the system. One method of thermal management of the battery can be the use of predictive thermal management. The predictive thermal management utilizes software-based prediction of upcoming events for which the required battery temperature window (limits) is also calculated and then the temperature of the battery is progressively controlled by heating up or cooling down the battery such that it always stays within the current and also the future temperature limits.

However, the predictive thermal management still has limitations occasioned, for example, by the accuracy of prediction of future operating conditions which in some scenarios of operation can lead to higher than optimal energy usage of the battery, reducing the overall energetic efficiency of the system in which the battery is used.

The energy efficiency of the thermal management can be further decreased by increasing the granularity of the control of battery temperature.

Hence, it is an object of the present invention to provide for an improved thermal management of a battery and hence for an improved energetic efficiency of the system in which the battery is used.

### Summary

The mentioned problems and drawbacks are addressed by the subject matter of the independent claims. Further preferred embodiments are defined in the dependent claims.

According to an aspect of the present invention there is provided a battery system comprising: a battery comprising a plurality of battery modules, each battery module comprising at least one battery cell, a first channel for distributing a fluid for the plurality of battery modules, a restriction means for reducing the amount of the fluid to be distributed for a subset of battery modules from the plurality of battery modules, and a control means for controlling said restriction means to reduce the amount of said fluid to be distributed for the subset of battery modules.

According to a further aspect of the present invention there is provided a method for controlling a battery system, said battery system comprising: a battery comprising a plurality of battery modules, each battery module comprising at least one battery cell, a first channel for distributing a fluid for the plurality of battery modules, a restriction means for reducing the amount of said fluid to be distributed for a subset of battery modules from the plurality of battery modules, the method comprising: controlling the restriction means to reduce the amount of said fluid to be distributed for the subset of battery modules.

### Brief description of the drawings

Embodiments of the present invention, which are presented for better understanding the inventive concepts, but which are not to be seen as limiting the invention, will now be described with reference to the figures in which:
- Fig. 1: shows a schematic illustration of the exemplary energy consumption distribution in a motor vehicle as an exemplary environment for applying embodiments of the present invention;
- Fig. 2: shows schematically an exemplary environment for applying embodiments of the present invention;
- Fig. 3: shows schematically an embodiment according to the present invention;
- Fig.4A and Fig. 4B: show schematically an embodiment according to the present invention;
- Fig.5A and Fig. 5B: show schematically an embodiment according to the present invention;
- Fig. 6A and Fig. 6B: show schematically an embodiment according to the present invention;
- Fig. 7A and Fig. 7B: show schematically an embodiment according to the present invention;
- Fig. 8: shows schematically an embodiment according to the present invention;
- Fig. 9: show schematically a general method embodiment according to the present invention;

### Detailed description

Exemplary environment of a system for applying embodiments of the present invention may be a motor vehicle. The motor vehicle may be a motor vehicle that entirely or at least in part uses for propulsion electric power stored in one or more batteries, such as electric vehicle or hybrid vehicle, but may also be a conventional fuel-based motor vehicle using a combustion-based power for propulsion, however using one or more batteries as a motor vehicle starter battery. Each of the one or more batteries comprises one or more battery modules, each battery module comprises at least one battery cell. However, normally, each of the battery modules comprises a plurality of battery cells, densely packed within the available space in the battery module.

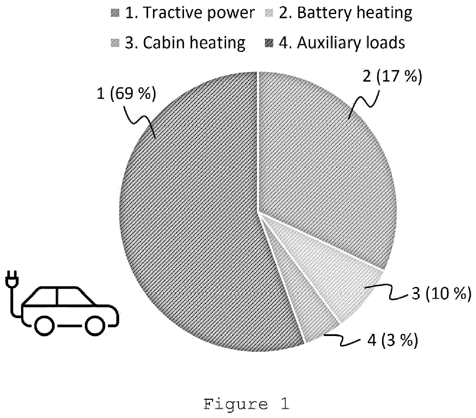

Figure 1 shows a schematic illustration of the exemplary energy consumption distribution in an electric vehicle as an exemplary environment for applying embodiments of the present invention. The electric vehicle comprises one or more batteries.

Figure 1 shows an exemplary energy consumption distribution for the electric vehicle for the case when energy is consumed for heating of the one or more batteries. Heating of the one or more batteries may be required in situations when the temperature of the one or more batteries is lower than a predetermined temperature below which safe operation of the one or more batteries cannot be guaranteed. For example, before a start of the operation of the one or more batteries (here "operation of the one or more batteries" may refer to the one or more batteries providing electrical energy for propulsion or for some auxiliary systems/loads in the electric vehicle), it may be required that the one or more batteries are heated at least up to the predetermined temperature. Further, before charging the one or more batteries, it may be required that the temperature of the one or more batteries is not lower than a predetermined temperature below which safe charging cannot be ensured.

It is shown in figure 1 that most of the energy consumption (in this example 69%) falls on the tractive energy consumption (energy consumption for propulsion). Significant part (in this example 10%) falls on energy consumption for cabin heating. A small part of the energy consumption (in this example 3%) falls on energy consumption by auxiliary loads. However, the second largest part of the energy consumption falls on energy consumption for heating the one or more batteries, in this exemplary case this part being 17%.

Heating of a battery in cold ambient conditions can use significant amounts of energy and drastically reduce the overall efficiency of the system, for example of the electric vehicle as an exemplary environment for applying embodiments of the present invention. In most electric vehicles, a resistive heater uses electrical power to warm (heat up) a liquid in a liquid cooling system to thereby transfer heat to the one or more batteries. The liquid in the liquid cooling system is normally used to cool the one or more batteries during operation of the one or more batteries if needed. In other electric vehicles, a resistive heater may be used which uses electrical power to warm (heat up) air in an air-cooling system of the one or more batteries to transfer heat to the one or more batteries. The air-cooling system is normally used for air cooling of the one or more batteries during operation of the battery if needed.

However, a resistive hater can increase the energy consumption of the vehicle by around or even over 20% on a WLTP (World Harmonized Light Vehicle Test Cycle) or similar drive cycle. The WLTP is divided into 4 different sub-parts, each one with a different maximum speed: low, medium, high, extra-high. For low power short-range drive cycles, the energy requirements of the electric vehicle can be often met without the use of all the cells within the one or more batteries.

Therefore, the present invention proposes heating up only a selected portion of the one or more batteries. Similarly, for situations in which cooling down of the battery is needed, the present invention proposes cooling down only a selected portion of the one or more batteries.

For this, the present invention proposes, for a battery that comprises a plurality of battery modules, each battery module comprising at least one battery cell, a thermal management of a part of the battery modules to be different than a thermal management of the other part of the battery modules. Thermal management includes management of the heating of the battery and management of the cooling of the battery. Hence the present invention proposes a selective thermal management of the battery modules.

In the following description, an electric vehicle is described as an exemplary environment for applying embodiments of the present invention, however, this is not limiting to the present invention. In other words, embodiments of the present invention may be applied to other exemplary environments as well, for example, hybrid vehicles, conventional fuel-based vehicles or different renewable energy system.

The thermal management according to the present invention enables that only a certain part of the battery is heated up or cooled down. The battery may be an AC battery or a DC battery. An AC battery comprises an energy storage part and a power electronics, for example a multilevel converter. For an AC battery, the thermal management of the battery according to the present invention enables that only a certain part of each phase of the battery is heated up or cooled down. For a DC battery, the thermal management of the battery according to the present invention enables that only a certain part of the battery is heated up or cooled down. The battery may be a single-chemistry battery but may also be a multi-chemistry battery. In a multi-chemistry battery, in one or more battery modules each of the battery cells or part of the battery cells may have a first type of battery chemistry, for example lithium-ion based battery chemistry, while in one or more other battery modules, each of the battery cells or part of the battery cells may have a different type of battery chemistry, for example, sodium-ion based battery chemistry.

The battery may also be a split-pack battery. A split-pack battery may refer to a battery pack in which multi-chemistry battery cells are arranged within a single battery housing. A split-pack battery may also refer to a battery pack that comprises battery cells arranged within multiple housings. The battery chemistry between the battery cells arranged within the different housings may be different.

The thermal management according to the present invention is particularly advantageous for situations in which, in a cold environment, a cold battery needs to be heated up to a predetermined temperature before start of operation of the battery, but at the same time the whole battery power (or the whole energetic capacity of the battery) is not required. The wording "start of operation of the battery" is to be understood as the battery being controlled to provide energy to the different systems of the electric vehicle, for example the traction system and/or auxiliary systems of the electric vehicle. Further, the thermal management according to the present invention is particularly advantageous for situations in which, in a cold environment, only a part of the battery modules of the cold battery needs to be charged, however, the temperature of the cold battery is lower than a predetermined temperature below which a safe charging cannot be ensured.

The thermal management according to the present invention is also particularly advantageous for situations in which the whole energetic capacity of the battery is not needed for operation of the electric vehicle, so that cooling down of the entire battery is not needed.

For low power short-range destinations or mid-range destinations, the power requirements of an electric vehicle can be often met without the use of all the cells within the battery. In other words, for short-range destinations or mid-range destination, where the whole energetic capacity of the battery may not be required, heating up or cooling down of the entire battery may be energetically inefficient. According to the thermal management according to the present invention only a certain part of the battery is heated up or cooled down.

In an AC battery where power distribution between different battery modules of the battery can be reconfigured and controlled, periodisation can be made to heat up or cool down only a selected portion of the battery to minimise the energy consumption.

For thermal management of the heating, for mid-range and short-range destination, where the majority of the available energetic capacity of the battery needs to be provided, the partial heating can still be utilized. First, the heater heats up the part of the battery (the part of the battery modules) used for the initial part of the driving. Then, depending on whether there is some dissipated heat from the drive train (traction system) available, either it can be used for heating up the rest of the battery or the resistive heater is used to heat up the rest of the battery when the capacity is needed.

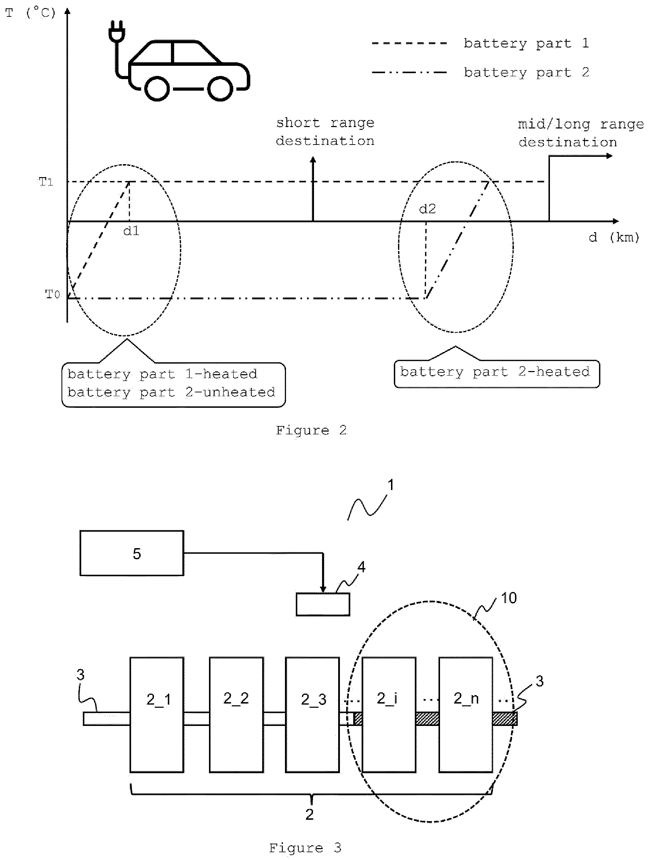

This inventive concept of the present invention is shown schematically in figure 2. For example, for a short-range destination a part of the battery may provide enough energy required for the short-range destination. Therefore, in cold environment conditions, according to the present invention, only a part of the battery (battery part 1, dashed line) is heated. The heating may occur before the drive is started or may occur at the initial phase of the drive. The temperature of battery part 1 increases gradually from value T₀ until a predetermined temperature T₁ is reached. When the predetermined temperature T1 is reached, the temperature of the heated battery part 1 is kept at a value suitable for operation of the battery, in this example at T₁. During this time, the rest of the battery (battery part 2-dashed-dotted line) is not heated. Even though figure 2 shows the temperature of battery part 2 as being T₀ during operation of battery part 1 during the drive, it is to be understood that the temperature does not necessarily remains at T₀.

If the drive is not a short drive, the energy provided by battery part 1 may not be enough for the drive. Therefore, battery part 2 is started to be heated at a time point (or distance point d2 in figure 2) at which battery part 1 still provides energy for the drive. Battery part 2 is heated at least until the predetermined temperature T₁ is reached. For the rest of the drive, the energy is provided by battery part 2 and battery part 1 or only by battery part 2.

The potential of this type of operation may be increased depending on whether the system has information about the type of drive that is intended to be performed. As an example, a very simple way to decide whether the partial heating or the full battery heating shall be activated is to use the actual driving mode, which is typically represented by values like eco, range, normal, sport etc. In other words, based on the set mode it may be determined whether the partial heating or the full battery heating shall be activated. A more complicated way of decision making could be based on knowledge of the future route from navigation data.

For implementing the above-described thermal management, the present invention proposes, in a battery system with a fluid cooling/heating system, diverting flow of fluid away from a portion of the battery.

Figure 3 shows an embodiment of the battery system 1 of the present invention. The battery system 1 comprises a battery 2. It is to be understood that even though "*battery*" in singular is used, this is not limiting, and the battery system 1 may comprise more than one battery. The battery 2 comprises a plurality of battery modules 2_1, 2_2, 2_3,...,2_i,....,2-n. Figure 3 shows five battery modules, however, this is not limiting. In other words, the term "*plurality*" is to be understood to represent at least two. In other words, the battery 2 comprising a plurality of battery modules 2_1, 2_2, 2_3,...,2_i,....,2-n is to be understood as comprising at least two battery modules 2_1, 2_2.

Each battery module 2_1, 2_2, 2_3,...,2_i,....,2-n comprises at least one battery cell (not shown in the figure). The battery cell is an energy storage element. In other words, each battery module 2_1, 2_2, 2_3,...,2_i,....,2-n comprises one or more battery cells (energy storage elements) encased in a mechanical structure to form each the battery module 2_1, 2_2, 2_3,...,2_i,....,2-n. It is to be understood that other components may also be encased in the mechanical structure, for example. For example, in an AC battery, a power electronics, for example a multilevel converter, may also be encased in the mechanical structure. It is to be further understood that a plurality of battery modules 2_1, 2_2, 2_3,...,2_i,....,2-n may further build a battery pack and one or more battery packs may build up the battery 2.

The battery system 1 comprises further a first channel 3 for distributing a fluid for the plurality of battery modules 2_1, 2_2, 2_3,...,2_i,....,2-n. The fluid may be a fluid for heating the plurality of battery modules 2_1, 2_2, 2_3,...,2_i,....,2-n or a fluid for cooling the plurality of battery modules. The fluid may be in a liquid or a gaseous state.

The battery system 1 comprises further a restriction means 4 for reducing the amount of the fluid to be distributed for a subset 10 of battery modules 2_i,...,2-n from the plurality of battery modules 2_1, 2_2, 2_3,...,2_i,....,2-n. In other words, the restriction means 4 is configured to reduce the amount of the fluid to be distributed for a subset 10 of battery modules 2_i,...,2-n from the plurality of battery modules 2_1, 2_2, 2_3,...,2_i,....,2-n. The subset 10 of battery modules 2_i,...,2-n comprises at least one battery module 2_i. In any case, the number of battery modules 2_i,...,2-n in the subset 10 is at least for one smaller than the number of battery modules 2_1, 2_2, 2_3,...,2_i,....,2-n of the battery 2.

The reducing the amount of the fluid to be distributed for a subset 10 of battery modules 2_i,...,2-n from the plurality of battery modules _1, 2_2, 2_3,...,2_i,....,2-n is shown in figure 3 schematically with filling the corresponding part of the first channel 3_1 with inclined lines. It is to be understood that even though figure 3 shows the battery modules 2_i,...,2-n in the subset 10 as arranged in a consecutive order, this is not limiting to the present invention. In other words, the battery modules 2_i,....,2-n in the subset 10 does not need to be arranged in a consecutive order with respect to the flow of the fluid. Even further, it is to be understood that even though figure 3 shows the battery modules 2_i,...,2-n at the right end as forming the subset 10, this is not limiting to the present invention.

The battery system 1 comprises further a control means 5 for controlling the restriction means 4 to reduce the amount of the fluid to be distributed for the subset 10 of battery modules 2_i,...,2-n. Hence, the control means 5 may be configured to control the restriction means 4 to reduce the amount of the fluid to be distributed for the subset 10 of battery modules 2_i,...,2-n. The control means 5 may therefore be configured to communicate with the restriction means 4. This means that the control means 5 may be configured to send one or more control signals to the restriction means 4. In some embodiments of the present invention, the restriction means 4 may also be configured to send one or more signals, for example feedback signals, to the control means 5.

The control means 5 may be any suitable unit or comprise any suitable unit, such as computer processing unit, that can perform computer processing. The control means 5 (also called controller) may be for example a micro processing unit (MCU). Further, the control means 5 may comprise storage means, such as a memory (not shown in the figure). The memory may also be a separate unit from the control means 5. The memory may store different information needed for the processing by the control means 5. Further, the memory may store computer program (code) comprising instructions which, when the program is executed by the control means 5, cause the control means 5 to carry out the processing (or method steps) of embodiments of the present invention.

In some embodiment of the present invention the control means 5 may be further configured to control each of the plurality of battery modules 2_1, 2_2, 2_3,...,2_i,...,2-n. This may comprise the control means 5 sending signals to each of the battery modules 2_1, 2_2, 2_3,...,2_i,...,2-n to instruct each of the battery modules 2_1, 2_2, 2_3,...,2_i,...,2-n to provide electrical energy to the necessary systems of, for example, the electric vehicle (traction system and/or auxiliary systems). In other words, the control means 5 may control the operation of each of the battery modules 2_1, 2_2, 2_3,...,2_i,...,2-n. For example, the control means 5 may send signals to a battery management system (BMS) of the battery 2 or BMS of each of the battery modules 2_1, 2_2, 2_3,...,2_i,...,2-n, to thereby control the battery modules 2_1, 2_2, 2_3,...,2_i,...,2-n.

In some embodiments of the present invention the first channel 3 may be a channel for distributing the fluid to the plurality of battery modules 2_1, 2_2, 2_3,...,2_i,....,2-n. In these embodiments of the present invention, the first channel 3 may be called an "*inlet*" channel. In other embodiments of the present invention, the first channel 3 may be a channel for distributing the fluid away from the plurality of battery modules 2_1, 2_2, 2_3,...,2_i,....,2-n. In these embodiments of the present invention, the first channel 3 may be called an "*outlet*" channel.

In some embodiments of the present invention the restriction means 4 may comprise or may be configured as preventing means for preventing the fluid to be distributed for the subset 10 of battery modules 2_i,...,2-n from the plurality of battery modules 2_1, 2_2, 2_3,...,2_i,...,2-n. In other words, in some embodiments of the present invention, the restriction means 4 may be configured to prevent the fluid to the distributed for the subset 10 of battery modules 2_i,...,2-n from the plurality of battery modules 2_1, 2_2, 2_3,...,2_i,...,2-n.

The restriction means 4 may therefore exhibit at least two different states. In other words, the restriction means 4 may be controllable by the control means 5 to adopt one of at least two different states. In the first state, the restriction means 4 may be configured not to influence the amount of the fluid to be distributed for a subset 10 of battery modules 2_i,...,2-n from the plurality of battery modules 2_1, 2_2, 2_3,...,2_i,....,2-n.

This state of the restriction means 4 may also be called open state. In the second state, the restriction means 4 may be configured to prevent the fluid to the distributed for the subset 10 of battery modules 2_i,...,2-n from the plurality of battery modules 2_1, 2_2, 2_3,...,2_i,....,2-n. This state of the restriction means 4 may also be called closed state. The restriction means 4 may exhibit one or more intermediate states. When the restriction means 4 is arranged in one of the intermediate states, the restriction means 4 may be configured to reduce the amount of the fluid to be distributed for a subset 10 of battery modules 2_i,...,2-n from the plurality of battery modules 2_1, 2_2, 2_3,...,2_i,....,2-n.

According to the embodiment of the present invention, it is possible that partial heating up or partial cooling down of the battery modules 2_1, 2_2, 2_3,...,2_i,....,2-n is performed. In other words, according to the present invention it is possible that the battery modules 2_i,...2-n in the subset 10 are not heated up/cooled down or are heated up/cooled down to a lower degree than the other battery modules outside the subset 10. This increases the energetic efficiency of the battery.

The above-described embodiment of the present invention enables therefore that efficient thermal management of the battery is performed.

In embodiments of the present invention, the restriction means 4 may comprise at least one valve. In some embodiments of the present invention the at least one valve may be a motorized valve. For example, the motorized valve may be a ball valve. In other embodiments of the present invention, the at least one valve may be a solenoid valve. For example, the solenoid valve may comprise a magnet with a pin. In some embodiments of the present invention, the at least one valve being a motorized valve may be preferable, since the motorized valve has a lower pressure drop and lower energy consumption than a solenoid valve. However, this is not limiting, and the skilled person would realize that the type of the restriction means 4, for example the type of the at least one valve may be chosen according to the environment in which the embodiments of the present invention are applied.

In embodiments of the present invention, the control means 5 may be configured to obtain a first information about an intended operation of the battery 2. The control means 5 may be further configured to control the restriction means 4 to reduce the amount of said fluid to be distributed for said subset 10 of battery modules 2_i,...,2-n based on the first information.

The first information may depend on the environment in which the present invention is applied. For example, when the environment in which the present invention is applied is an electric vehicle, the first information may be information enabling the control means 5 to predict the required energetic capacity of the battery 2 for the drive. In one embodiment of the present invention, the first information may be information indicating whether the driving mode set by the user is a predetermined driving mode normally used by the user. The predetermined driving mode may be set as one of eco mode, range mode, normal mode, sport mode or similar. Depending on the set driving mode different energetic capacity of the battery 2 may be required.

In a further embodiment of the present invention, the first information may be an information indicating an entered route for the drive on a navigation system or information obtained through data relating to an entered route for the drive on a navigation system. In other words, in these embodiments of the present invention, the control system 5 may be configured to control the restriction means 4 based on a first information indicating or being related to, for example, a length of a driving route.

In still other embodiments of the present invention, the first information may be information obtained based on past uses of the electric vehicle. For example, in one period of the day or the week, the user may use the electric vehicle for short range destinations, while in other period of the day or the week, the user may use the vehicle for long range destinations.

The control means 5 may be configured to obtain the first information from another control means, from a memory, or if the control means 5 is arranged to process information related to any of the above-described examples of predetermined driving mode, entered route on a navigation system or past uses of the electric vehicle, may even be configured to obtain the information by processing the information related to any of the above-described examples of predetermined driving mode, entered route on a navigation system or past uses of the electric vehicle.

Based on the first information, the control means 5 may perform even more efficient thermal management of the battery 2.

The obtaining of the first information is not obligatory, and the control means 5 may control the restriction means 4 also without obtaining such first information.

In one or more embodiments of the present invention, the control means 5 may be further configured to control the operation of each one of the plurality of battery modules 2_1, 2_2, 2_3,...,2_i,....,2-n based on the controlling of the restriction means 4.

In some embodiments of the present invention, the control means 5 being further configured to control the operation of each one of the plurality of battery modules 2_1, 2_2, 2_3,...,2_i,....,2-n based on the controlling of the restriction means 4 may comprise the control means 5 being configured to control the operation of the battery modules outside the subset 10 such that at least one or all of the one or more battery modules outside the subset 10 is in operation when the restriction means 4 is controlled to reduce the amount of said fluid to be distributed. In some embodiments of the present invention, the control means 5 being further configured to control the operation of each one of the plurality of battery modules 2_1, 2_2, 2_3,..., 2_i,...,2_n based on the controlling of the restriction means 4 may comprise the control means 5 being configured to control the operation of the battery modules in the subset 10 such that at least one or all of the battery modules in the subset is not in operation when the restriction means 4 is controlled to reduce the amount of said fluid to be distributed for the subset.

In some embodiments of the present invention, the control means 5 being further configured to control the operation of each one of the plurality of battery modules 2_1, 2_2, 2_3,...,2_i,....,2-n based on the controlling of the restriction means 4 may comprise the control means 5 being configured to control the operation of the battery modules outside the subset 10 such that at least one or all of the one or more battery modules outside the subset 10 is not in operation when the restriction means 4 is controlled to reduce the amount of said fluid to be distributed for the subset 10 at least during a first time interval. For example, in a case of charging the one or more battery modules outside the subset 10, it may be needed that the one or more battery modules outside the subset 10 are heated without being in operation. In addition, if the one or more battery modules outside the subset 10 were in operation but need to be recharged it may be needed that the one or more battery modules outside the subset 10 are controlled not to be in operation but to be still cooled down if the temperature, due to the preceding operation of the one or more battery modules outside the subset 10 is still higher than a predetermined temperature which may be an upper limit for charging the one or more battery modules being outside the subset 10.

In other embodiments of the present invention the control means 5 being further configured to control the operation of each one of the plurality of battery modules 2_1, 2_2, 2_3,..., 2_i,...,2_n based on the controlling of the restriction means may comprise the control means 5 being configured to control the operation of at least one or all of the battery modules in the subset 10 to operate differently than the other one or more battery modules outside the subset 10. For example, while the battery modules outside the subset 10 may be controlled to be operated in a normal mode of operation, the battery modules in the subset 10 may be controlled to be operated in a reduced mode of operation. In a reduced mode of operation, the power produced by the battery modules may be lower than the power produced by the battery modules in normal mode of operation. For example, when the liquid is used for cooling the battery modules, the control means 5 may control the battery modules in the subset 10 to operate in a reduced mode of operation.

In embodiments of the present invention, the subset 10 of battery modules may be pre-determined. The control means 5 may be configured to apply heating up or cooling down to the one or more battery modules 2_i outside the subset and apply heating up or cooling down to the one or more battery modules 2_i in the subset 10 only if the energetic capacity of the one or more battery modules outside the subset 10 is not sufficient for completing the drive, for example.

In other embodiments of the present invention, the control means 5 may be configured to periodically arrange the plurality of the battery modules to be part of the subset 10. One period may be for example one drive of the electric vehicle.

In some embodiments of the present invention, the battery modules outside the subset 10 may be utilized more often than the battery modules in the subset 10, leading to uneven aging of the plurality of battery modules 2_1, 2_2, 2_3,..., 2_i,...,2_n. For example, this may be the case in embodiments of the present invention in which the subset 10 of battery modules is predetermined. To compensate for this, in embodiments of the present invention a cost algorithm or a state of health (SoH) algorithm may be used that enables for consistent aging between the battery modules, where the modules in the subset 10 are utilised for compensation to a greater extent in other conditions. "Other conditions" is to be understood in situations when the control means 5 is not controlling the restriction means 4 to reduce the amount of fluid to be distributed for the subset 10. This ensures maximum utilization of all battery modules over the lifetime of the application of the battery 2.

To implement this, in embodiments of the present invention, the control means 5 may be configured to monitor at least one parameter related to the controlling of the restriction means 4 to reduce the amount of said fluid to be distributed for the subset 10. The at least one parameter may be for example a parameter indicating how many times the control means 5 controlled the restriction means 4 to reduce the amount of fluid to be distributed for the subset. The control means 5 may be configured to control the operation of the plurality of battery modules 2_1, 2_2, 2_3,...,2_i,...,2-n based on said parameter such that one or more battery modules 2_i,...,2-n in the subset 10 is operated differently than the other one or more battery modules outside the subset 10 during operation of the battery 2 when the restriction means 4 is not controlled to reduce the amount of said fluid to be distributed for the subset 10. This ensures maximum utilisation of all battery modules 2_1, 2_2, 2_3,...,2_i,...,2-n over the lifetime of the battery 2. In addition, to compensate for this, one or more battery modules in the subset 10 may differ from one or more battery modules outside the subset at least in one of the material of an anode and/or cathode and an electrolyte of the at least one battery cell.

In embodiments of the present invention, the battery system 1 may further comprise a plurality of second channels. Each one of the second channels may be arranged to communicate with the first channel for distributing the fluid for a respective one battery module 2_i of the plurality of battery modules 2_1, 2_2, 2_3,...,2_i,....,2-n. In other words, each of the second channels 3_2 may be arranged to be in fluid communication with the first channel for distributing the fluid for a respective one battery module 2_i of the plurality of battery modules 2_1, 2_2, 2_3,...,2_i,....,2-n.

The battery system 1 may comprise further a third channel arranged to distribute said fluid for the plurality of battery modules 2_1, 2_2, 2_3,...,2_i,....,2-n.

In embodiments of the present invention, each of the second channels may be arranged to communicate with the third channel. In other words, each of the second channels may be arranged to be in fluid communication with the third channel. The direction of flow of the fluid through the first channel with respect to the plurality of battery modules 2_1, 2_2, 2_3,...,2_i,...,2-n may be opposite from the direction of flow of the fluid through the third channel with respect to the plurality of battery modules 2_1, 2_2, 2_3,...,2_i,....,2-n. In this way, in embodiments of the present invention, the battery modules 2_1, 2_2, 2_3,...,2_i,....,2-n are arranged in a parallel fluid flow.

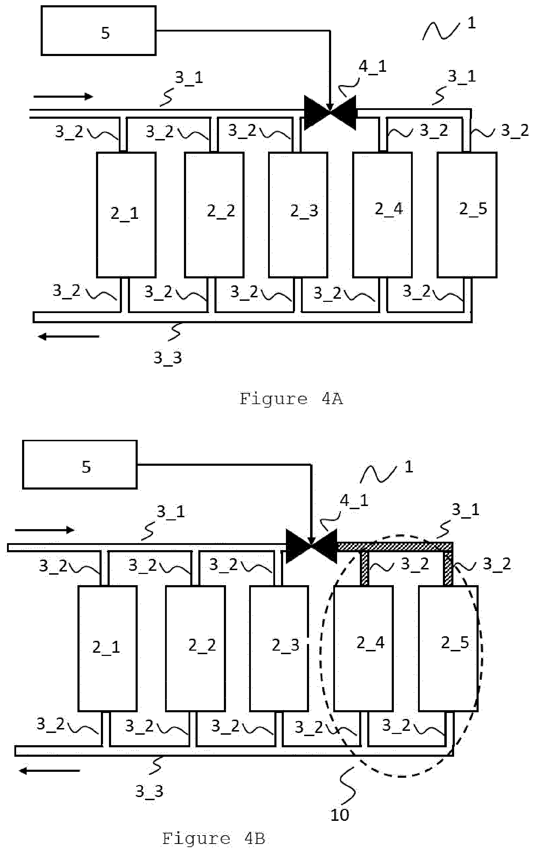

There is shown in figure 4A and figure 4B an embodiment of the present invention in which the battery modules 2_1, 2_2, 2_3,...,2_i,...,2-n are arranged in a parallel fluid flow. The first channel 3_1 is a channel 3_1 for distributing the fluid to the plurality of battery modules 2_1, 2_2, 2_3,...,2_i,...,2-n (there are shown five battery modules 2_1, 2_2, 2_3, 2_4, 2-5 in figure 4A and figure 4B, however this is not limiting) . In figure 4A and figure 4B the direction of fluid flow in the first channel 3_1 with respect to the plurality of battery modules 2_1, 2_2, 2_3, 2_4, 2-5 is denoted with the arrow 501. In this embodiment of the present invention, the first channel 3_1 may also be called an "*inlet*" channel. In this embodiment of the present invention, the battery system comprises a plurality of second channels 3_2. Each one of the second channels 3_2 is arranged to communicate (to be in fluid communication) with the first channel 3_1 for distributing the fluid from the first channel 3_1 to a respective one battery module 2-i of the plurality of battery modules 2_1, 2_2, 2_3, 2_4, 2_5.

In this embodiment of the present invention, the battery system 1 comprises further a third channel 3_3 arranged to distribute said fluid away from plurality of battery modules 2_1, 2_2, 2_3, 2_4, 2_5. In the third channel 3_3, the direction of flow of the fluid with respect to the plurality of battery modules 2_1, 2_2, 2_3, 2_4, 2_5 is opposite from the direction of flow of the fluid through the first channel 3_1 with respect to the plurality of battery modules 2_1, 2_2, 2_3, 2_4, 2_5. The direction of flow of the fluid with respect to the plurality of battery modules 2_1, 2_2, 2_3, 2_4, 2_5 is shown in figure 4A and figure 4B with an arrow 502. In this embodiment of the present invention, the third channel 3_3 may also be called an "*outlet*" channel.

Each of the second channels 3_2 is arranged to communicate (to be in fluid communication) with the third channel 3_3. In this way, in this embodiment of the present invention, the battery modules 2_1, 2_2, 2_3, 2_4, 2_5 are arranged in a parallel fluid flow.

In this embodiment of the present invention, the restriction means 4 comprises a first restriction means 4_1. The first restriction means 4_1 is arranged on the first channel 3_1. Figure 4A and figure 4B show the first restriction means 4_1 as being arranged on the first channel 3_1 between the third battery module 2_3 and the fourth battery module 2-4, however this is not limiting and the first restriction means 4_1 may be arranged on the first channel 3_1 between any two battery modules out of the plurality of battery modules 2_1, 2_2, 2_3, 2_4, 2_5. Therefore, in this embodiment of the present invention, the first restriction means 4_1 is arranged to reduce the amount of fluid to be distributed for the subset 10 of battery modules which comprises the fourth 2_4 and fifth battery modules 2_5 from the plurality of battery modules 2_1, 2_2, 2_3, 2_4, 2_5.

Figure 4A shows the battery system 1 of this embodiment of the present invention when the restriction means 4_1 is in the first state (open state). Accordingly, the restriction means 4_1 does not influence the amount of fluid to be distributed to the subset 10 of battery modules 2_4, 2_5. Hence, all battery modules of the plurality of battery modules 2_1, 2_2, 2_3, 2_4, 2_5 are heated up or cooled down.

The control means 5 is arranged to control the first restriction means 4_1 to reduce the amount of fluid to be distributed for the subset 10 of battery modules 2_4, 2_5 from the plurality of battery modules 2_1, 2_2, 2_3, 2_4, 2_5. The control means 5 is accordingly arranged to send one or more control signals to the first restriction means 4_1 to place the first restriction means 4_1 in one of the intermediate states or the closed state. This is shown in figure 4B. The reduction of the amount of fluid to be distributed to the subset 10 of battery modules 2_4, 2_5 is shown in figure 4B with filling of the corresponding part of the first channel 3_1 and the corresponding second channels 3_2 with inclined lines. Hence, unlike the first three battery modules 2_1, 2_2, 2_3, the last two battery modules 2_4, 2_5 are either not heated up/cooled down or are heated up/cooled down to a lower degree.

Referring to figure 2, the first three battery modules 2_1, 2_2, 2_3 shown in figure 4A and figure 4B may correspond to battery part 1 and the last two battery modules 2_4, 2_5 shown in figure 4A and figure 4B may correspond to battery part 2.

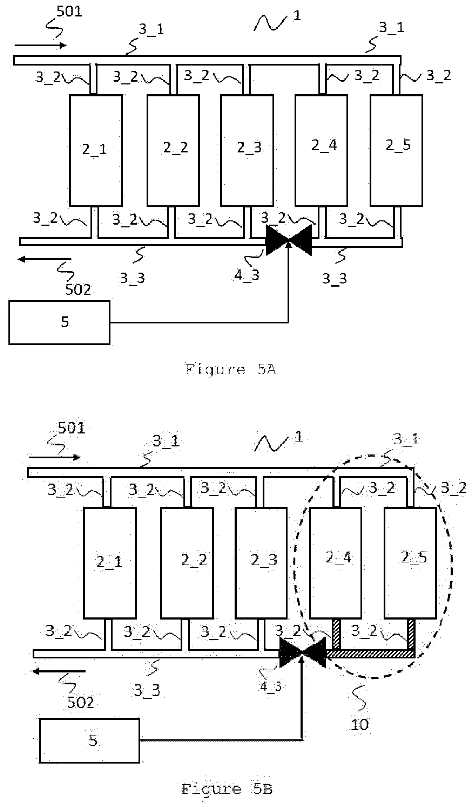

There is shown in figure 5A and figure 5B another embodiment of the present invention in which the battery modules 2_1, 2_2, 2_3,...,2_i,....,2-n are arranged in a parallel fluid flow. In this embodiment of the present invention the restriction means 4 comprises a third restriction means 4_3 arranged on the third channel 3_3 in difference to the embodiment shown in figure 4A and figure 4B. In other words, figure 5A and figure 5B show the battery system 1 of embodiment of the present invention in which the restriction means 4 does not comprise the first restriction means 4_1 shown in figure 4A and 4B. However, this is not limiting and in embodiments of the present invention the restriction means 4 may comprise the third restriction means 4_3 in addition to the first restriction means 4_1.

Figure 5A and figure 5B show the third restriction means 4_3 as being arranged on the third channel 3_3 between the third battery module 2_3 and the fourth battery module 2-4. Therefore, in this embodiment of the present invention, the subset 10 is formed by the fourth and fifth battery modules 2_4, 2_5 from the plurality of battery modules 2_1, 2_2, 2_3, 2_4, 2_5. However, this is not limiting, and the third restriction means 4_3 may be arranged on the third channel 3_3 between any two battery modules out of the plurality of battery modules 2_1, 2_2, 2_3, 2_4, 2_5.

Figure 5A shows the battery system 1 of this embodiment of the present invention when the third restriction means 4_3 is in the first state. Accordingly, the third restriction means 4_3 does not influence the amount of fluid to be distributed away from the subset 10 of battery modules 2_4, 2_5.

The control means 5 is arranged to control the third restriction means 4_3 to reduce the amount of fluid to be distributed away from the subset 10 of battery modules 2_4, 2_5 from the plurality of battery modules 2_1, 2_2, 2_3, 2_4, 2_5. The control means 5 is accordingly arranged to send one or more control signals to the third restriction means 4_3 to place the third restriction means 4_3 in one of the intermediate states or the closed state. This is shown in figure 5B. The reduction of the amount of fluid to be distributed from the subset 10 of battery modules 2_4, 2_5 is shown in figure 5B with filling of the corresponding part of the third channel 3_2 and the corresponding second channels 3_2 with inclined lines. Hence, in this embodiment of the present invention, the first channel will distribute the fluid to the battery modules 2_4, 2_5 of the subset 10. However, since the distributed fluid cannot be distributed away from the battery modules 2_4, 2_5 of the subset 10 (third restriction means 4_3 in the closed state) or can be distributed away to a reduced degree compared to the first three battery modules 2_1, 2_2, 2_3 (third restriction means 4_3 in one of the intermediate states), for the battery modules 2_4, 2_5 of the subset 10 there is no active circulation of the fluid or the circulation of the fluid is reduced, the battery modules 2_4, 2_5 of the subset 10 are not heated up /cooled down or are heated up/cooled down to a lower degree.

Referring to figure 2, the first three battery modules 2_1, 2_2, 2_3 shown in figure 5A and figure 5B may correspond to battery part 1 and the last two battery modules 2_4, 2_5 shown in figure 4A and figure 4B may correspond to battery part 2.

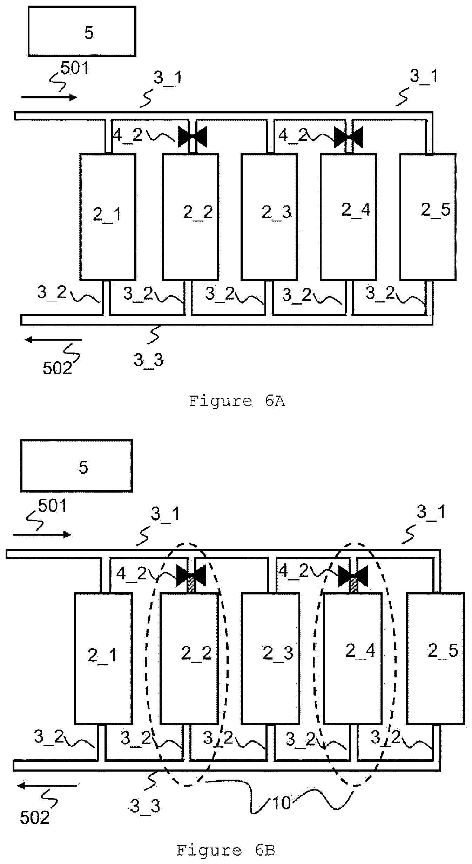

There is shown in figure 6A and figure 6B another embodiment of the present invention in which the restriction means 4 comprises a second restriction means 4_2 arranged on the one of the second channels 3_2. More specifically, there is shown in figure 6A and figure 6B that the restriction means 4 comprises two second restriction means 4_2, one second restriction means 4_2 arranged on the second channel 3_2 that distributes the fluid to the second battery module 2_2 and one second restriction means 4_2 arranged on the second channel 3_2 that distributes the fluid to the fourth battery module 2_4. In this embodiment of the present invention, the subset 10 of battery modules is formed by the second battery module 2_2 and the fourth battery module 2_4. Figure 6A and figure 6B show the battery system 1 in which the restriction means 4 does not comprise the first restriction means 4_1 shown in figure 4A and 4B nor the third restriction means 4_3 shown in figure 5A and figure 5B. However, this is not limiting and in embodiments of the present invention the restriction means 4 may comprise the first restriction means 4_1 and/or the third restriction means 4_3 in addition to the one or more second restriction means 4_2.

Further, the position of the second restriction means 4_2 is not limited to the position shown in figure 6A and figure 6B, but a second restriction means 4_2 may be arranged on a desired respective one of the plurality of second channels 3_2 (and hence on any one of the second channels 3_2).

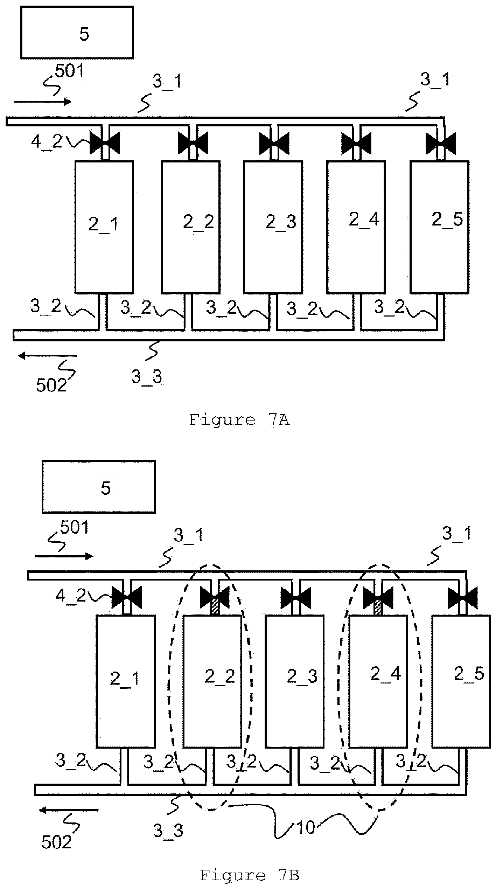

The number of second restriction means 4_2 is also not limited to 2. In some embodiments of the present invention, the number of second restriction means 4_2 may be equal to the number of second channels 3_2. This embodiment of the present invention is shown in figure 7A and figure 7B. In other words, in some embodiments of the present invention, a second restriction means 4_2 may be arranged on each one of the second channels 3_2. In this embodiment of the present invention, the one or more second restriction means 4_2 enable to dynamically control the thermal management of the battery 2. In this embodiment of the present invention, there is a high degree of freedom for determining the battery modules to form the subset 10. For example, there is shown in figure 7B that the subset 10 is formed by the battery modules 2_2 and 2_4. In a different period of the lifecycle of the battery 2, the subset 10 may be formed by one or more other battery modules from the plurality of battery modules 2_1, 2_2, 2_3,...2_i,...2_n. Accordingly, it is enabled that the thermal management of the battery 2 is even more dynamically controlled and is more efficiently adjusted to the current requirements for energy from the battery 2. In other words, the subset 10 can be dynamically determined based on the current conditions in the environment in which the embodiments of the present invention are applied.

The number of second restriction means 4_2 may be chosen in dependence of the requirements of the environment in which the present invention is applied. For example, in stationary storage application where the mass of the battery 2 is not of a relevance, more than one second restriction means 4_2 may be used for controlling efficiently the thermal management of the battery 2.

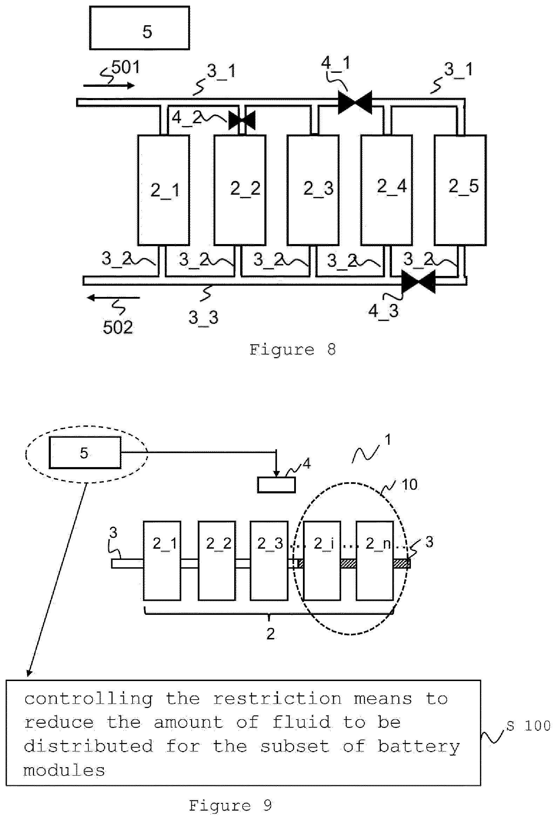

There is shown in figure 8 an embodiment of the present invention in which the restriction means 4 comprises a first restriction means 4_1, one second restriction means 4_2 and a third restriction means 4_3. In this embodiment of the present invention, the freedom of determining the subset 10 is also high and it is enabled that the thermal management of the battery 2 is even more dynamical controlled and is more efficiently adjusted to the current requirements for energy from the battery 2. In other words, the subset can be dynamically determined based on the current conditions in the environment in which the embodiments of the present invention are applied. It is to be understood, as also elaborated above, that in other embodiments of the present invention, the restriction means may comprise other combinations of the first restriction means 4_1 and/or one or more second restriction means 4_2 and/or third restriction means.

In the embodiments shown above, at least one pumping means may be used configured to pump the fluid into the first channel and/or one or more of the plurality of second channels. In other embodiments of the present invention, at least one pumping means may be used configured to pump the fluid out of the third channel.

Figure 9 shows a general method for controlling the battery system 1 of the present invention. The battery system 1 comprises a battery 2 comprising a plurality of battery modules 2_1, 2_2, 2_3,...,2_i,...,2_n each battery module comprising at least one battery cell, a first channel 3_1 for distributing a fluid for the plurality of battery modules 2_1, 2_2, 2_3,...,2_i,...,2_5, and a restriction means 4 for reducing the amount of said fluid to be distributed for a subset 10 of battery modules from the plurality of battery modules 2_1, 2_2, 2_3,...,2_i,...,2_n. The method comprises controlling (S100) the restriction means to reduce the amount of said fluid to be distributed for the subset of battery modules.

In summary, as elaborated above the present invention enables that partial heating up or partial cooling down of the plurality of battery modules 2_1, 2_2, 2_3,...,2_i,....,2-n is performed. In other words, according to the present invention it is possible that the battery modules 2_i,...2-n in the subset 10 are not heated up/cooled down or are heated up/cooled down to a lower degree than the other part of the battery outside the subset 10. This increases the energetic efficiency of the battery 2.

The above-described embodiment of the present invention enables therefore that efficient thermal management of the battery 2 is performed and hence the energetic efficiency of the system in which the battery is used is improved.

Although detailed embodiments have been described, these only serve to provide a better understanding of the invention defined by the independent claims and are not to be seen as limiting.

## Claims

1. A battery system comprising:
a battery comprising a plurality of battery modules, each battery module comprising at least one battery cell,
a first channel for distributing a fluid for the plurality of battery modules,
a restriction means for reducing the amount of the fluid to be distributed for a subset of battery modules from the plurality of battery modules, and
a control means for controlling said restriction means to reduce the amount of said fluid to be distributed for the subset of battery modules.

2. The battery system according to claim 1,
wherein the plurality of battery modules comprises at least two battery modules, wherein the subset of battery modules comprises at least one battery module.

3. The battery system according to any one of claims 1 and 2, comprising further a plurality of second channels, wherein each one of the second channels is arranged to communicate with the first channel for distributing the fluid for a respective one battery module of the plurality of battery modules.

4. The battery system according to any one of claims 1 to 3, wherein the restriction means comprises a first restriction means arranged on the first channel.

5. The battery system according to any one of claims 1 to 4, wherein the restriction means comprises one or more second restriction means, each one of the one or more second restriction means arranged on a respective one of the plurality of second channel.

6. The battery system according to claim 5, wherein the number of second restriction means is equal to the number of second channels.

7. The battery system according to any one of claims 1 to 6, further comprising a third channel arranged to distribute said fluid for the plurality of battery modules, wherein each of the second channels is arranged to communicate with the third channel, wherein the direction of flow of the fluid through the first channel with respect to the plurality of battery modules is opposite from the direction of flow of the fluid through the third channel with respect to the plurality of battery modules.

8. The battery system according to claim 7, wherein the restriction means comprises a third restriction means arranged on the third channel.

9. The battery system according to any one of claims 1 to 8, wherein the restriction means comprises at least one valve, wherein the valve is a motorized valve or a solenoid valve.

10. The battery system according to any one of claims 1 to 9, wherein the control means is configured to obtain a first information about an intended operation of the battery, wherein the control means is configured to control said restriction means to reduce the amount of said fluid to be distributed for said subset of battery modules based on the first information.

11. The battery system according to any one of claims 1 to 10, wherein the control means is further configured to control the operation of each one of the plurality of battery modules based on the controlling of the restriction means.

12. The battery system according to claim 11, wherein the control means is further configured to control the operation of each one of the plurality of battery modules based on the controlling of the restriction means comprises the control means being configured to control the operation of the battery modules in the subset such that at least one or all of the battery modules in the subset is not in operation when the restriction means is controlled to reduce the amount of said fluid to be distributed for the subset or at least one or all of the battery modules in the subset operates differently than the other one or more battery modules outside the subset.

13. The battery system according to any one of claims 1 to 12, wherein the control means is further configured to control the operation of each one of the plurality of battery modules based on the controlling of the restriction means comprises the control means being configured to control the operation of the battery modules outside the subset such that at least one or all of the one or more battery modules outside the subset is not in operation when the restriction means is controlled to reduce the amount of said fluid to be distributed for the subset at least during a first time interval.

14. The battery system according to any one of claims 1 to 13, wherein the control means is further configured to monitor at least one parameter related to the controlling of the restriction means to reduce the amount of said fluid to be distributed for the subset.

15. The battery system according to claim 14, wherein the control means is configured to control the operation of the plurality of battery modules based on said parameter such that one or more battery modules in the subset is operated differently than the other one or more battery modules outside the subset during operation of the battery when the restriction means is not controlled to reduce the amount of said fluid to be distributed for the subset.

16. The battery system according to any one of claims 1 to 15, wherein the restriction means comprises preventing means for preventing the fluid to be distributed for the subset of battery modules from the plurality of battery modules.

17. The battery system according to any one of claims 1 to 16, wherein the first channel is a channel for distributing the fluid to the plurality of battery modules and the third channel is a channel for distributing the fluid away from the plurality of battery modules or the first channel is a channel for distributing the fluid away from the plurality of battery modules and the third channel is a channel for distributing the fluid to the plurality of battery modules.

18. A method for controlling a battery system, said battery system comprising:
a battery comprising a plurality of battery modules, each battery module comprising at least one battery cell,
a first channel for distributing a fluid for the plurality of battery modules,
a restriction means for reducing the amount of said fluid to be distributed for a subset of battery modules from the plurality of battery modules,
the method comprising:
controlling the restriction means to reduce the amount of said fluid to be distributed for the subset of battery modules.
